# EUROPÄISCHE PATENTSCHRIFT

(11) **EP 1 841 559 B1**
(45) Veröffentlichungstag und Bekanntmachung des Hinweises auf die Patenterteilung: **23.04.2008**
(21) Anmeldenummer: 06764218.1
(22) Anmeldetag: 19.07.2006
(51) Int. Cl.: B23K 11/30, B23Q 3/155

(54) **PUNKTSCHWEISSKAPPENWECHSLER**
SPOT WELDING CAP CHANGER
CHANGEUR DE CAPSULES DE SOUDAGE PAR POINT

(30) Priorität: 28.07.2005 DE 102005035915
(43) Veröffentlichungstag der Anmeldung: 10.10.2007
(73) Patentinhaber: Kaeseler, Werner, 34225 Baunatal (DE)
(72) Erfinder: Kaeseler, Werner, 34225 Baunatal (DE)
(74) Vertreter: Hanewinkel, Lorenz
(86) Internationale Anmeldenummer: PCT/EP2006/064417
(87) Internationale Veröffentlichungsnummer: WO 2007/012593

(56) Entgegenhaltungen:
- WO-A2-20/04035251
- DE-A1- 10 222 248
- DE-C1- 10 124 243
- FR-A- 2 760 392

## Beschreibung

Die Erfindung betrifft einen Punktschweißkappenwechsler mit einem Kappenabzieher und zwei Kappenmagazinen, wobei der Kappenabzieher einen Greifer mit federbelasteten, schwenkbaren Backen aufweist, der eine in diese eingeführte Punktschweißkappe einer Punktschweißzange gegen eine Verdrehung einklemmend bei einer Dreh- und axialen Abzugsbewegung von einem Schweißzangenschaft ablöst und wobei die Kappenmagazine Punktschweißkappen jeweils in einem Kappenträger gerichtet orientiert halten und durch eine Vorschubkraft jeweils nacheinander einzeln an einen Anschlag in eine Zugriffsstellung befördert sind , aus der sie auf den freien Schweißzangenschaft axial aufsteckbar und mit ihm herausziehbar sind.

Ein derartiger mechanischer Elektroden-Kappenwechsler ist aus der DE 102 22 248 A1 bekannt. Dieser weist einen zweiteiligen, von beiden Seiten zugängigen, Kappenzieher in getrenntem Aufbau zum Magazin auf.

Die Dokumente FR-A-2 760 392 und WO 2004/035251 A offenbaren ebenfalls einen Punktschweißkappenwechsler mit einem Kappenabzieher und zwei Kappenmagazinen.

Da die Kappen durch Schwerkraft gegen einen Kappenanschlag rutschen, kann die Vorrichtung nur in der Nähe eines beweglichen Schweißroboters stationär angeordnet betrieben werden. Ein Kappenwechsel an einer stationären Schweißzange, dem jeweils ein zu schweißendes Bauteil durch einen Roboter zugeführt wird, ist also nicht möglich. Die Schweißzangen/-anlagen weisen oft kurze, z.B. gekrümmte Schäfte auf, so dass der rundum mit drei Backen bestückte entsprechend große Kappenabzieher nicht in eine Abzugsposition zu bringen ist.

Aufgabe der Erfindung ist es, ein schnelleres, sichereres Wechseln der Punktschweißkappen sowohl an beweglichen als auch stationären Punktschweißanlagen mit kurzem Zugriffsweg automatisch zu ermöglichen.

Die Lösung besteht darin, dass
der Kappenabzieher zwei entgegengesetzt gerichtete Greifer mit jeweils zueinander verschwenkbaren, endseitig geöffneten Backen mit annähernd parallelen gezahnten Greifflächen aufweist, deren Abstand ein geringes Untermass zu einem Schweisskappendurchmesser hat,
und das Kappenmagazin jeweils einen Kappenträger enthält, der, von einer Federdose angetrieben, mit seiner Vorschubkraft jeweils eine der Kappen an den Anschlag drückt, und in der Zugriffsstellung eine Randüberdeckung die Kappe einseitig übergreift.

Vorteilhafte Ausgestaltungen sind in den Unteransprüchen angegeben.

Bei der neuen Ausführung sind der Kappenabzieher und das Magazin auf einem, vorzugsweise federnd gelagerten, Träger aufgebaut. Im Gegensatz zum vorbekannten System ermöglicht die neue Konstruktions-ausführung nicht nur den Einsatz an Schweißrobotern, sondern auch an stationären Schweißzangen oder -anlagen.

Gegenüber dem vorbekannten Klemmsystem mit drei Backen ermöglicht die neue Kappen-Ziehausführung kürzere Spann- und Drehwege, damit wesentlich kürzere Zeiten für das Lösen der Kappen. Außerdem ergibt sich durch die kleinere Bauform ein größeres Einsatzspektrum z.B. an Sonderzangen oder sehr kurzen gekrümmten Schäften.

Die beiden Kappenabzieher sind jeweils endseitig der Backen offen und somit für eine Kappe zugänglich. Die Backen greifen diese unmittelbar durch ihr Untermass ihres Abstandes und lösen die Kappe bereits bei einer Drehung um einen Winkel von ca. 30 - 60° fest. Dadurch ist ein Kappenwechsel auch bei äußerst beengten Raumverhältnissen möglich. Da die beiden Greifer in entgegengesetzte Richtung orientiert sind, ist jeweils eine von ihnen für einen Zugriff von den verschiedenen Seiten bei einer Rechtsdrehung nutzbar, so daß kein Wenden der Zange erforderlich ist, auch wenn die Schweißzangenschäfte geschraubt gehalten sind.

Weiterhin ist das Rundmagazin wesentlich kompakter als das Schwerkraft-Geradmagazin vorbekannter Bauweise. Durch den Federantrieb läßt es sich in beliebiger Lage halten und betreiben.

Auch erlauben die beiden achsparallel angeordneten Rundmagazine jeweils einen Zugriff auf kurzem radialen Weg zu den Eingriffspositionen in die Zugriffsöffnungen. In einer Ausführung mit einem Magazindeckel wird dieser beim Zugriff unmittelbar so weit verschoben, daß die Randüberdeckung den Kappenrand freigibt und das Herausnehmen möglich wird. Das Beispiel zeigt ein radiales Einlaufen und einen axialen Zugriff der Schäfte ins Magazin.

Beide Teilvorrichtungen, der Kappenwechsler und die Kappenmagazine, sind auf einem Träger nahe beieinander montiert und lassen sich so stationär aufstellen oder auf einem Roboterarm fest oder lösbar montieren. Im ersten Fall wechselt der Schweißroboter die Kappen seiner Zange, und im zweiten Fall wechselt der Roboter mittels der Vorrichtung die Kappen an den stationären Zangen bzw. Anlagen. Dabei ist die Wechselvorrichtung am Roboterarm in einem Freiraum neben dem Greifer des Roboters oder auf einer Führungsschiene verschiebbar ständig einsatzbereit montiert, oder sie liegt in einer Parkstellung bereit, aus der sie vom Greifer abgeholt und zum Einsatz gebracht wird; man nennt dieses Wechselzangen-Prinzip.

An der Vorrichtung sind vorteilhaft Kappensensoren angeordnet, die signalisieren, ob eine Kappe vorhanden ist oder nicht. Darüberhinaus wird der Füllstand der Magazine überwacht. Auf diese Weise wird sichergestellt, daß nach einem Kappenwechsel am Schweißzangenschaft eine Kappe vorhanden ist, bevor das Kühlwasser zugeschaltet wird. Weiterhin läßt sich damit überprüfen, ob die alte Kappe abgezogen wurde, wenn bei einer Annäherung des Schaftes keine Kappe vorhanden gemeldet wird.

Die Ausführung des Kappenmagazins ohne Deckel hält in einem elastischen Kappenträger die Schweißkappen in enger Passung unter Schub- oder Zugkraft axialverschieblich.

Vorteilhafte Ausgestaltungen sind in den Fig. 1 bis 6 dargestellt.
- Fig. 1: zeigt die Gesamtvorrichtung schematisch perspektivisch;
- Fig. 2: zeigt eine transparente Aufsicht des Kappenabziehers;
- Fig.2A,2B: zeigen Detailvergrößerungen von den Greifflächen;
- Fig. 3: zeigt eine Perspektive des Kappenabziehers;
- Fig. 4: zeigt ein Kappenmagazin perspektivisch, geschlossen, vergrößert
- Fig. 5: zeigt ein Kappenmagazin perspektivisch, geöffnet, vergrößert
- Fig. 6: zeigt eine Draufsicht auf den Magazindeckel.

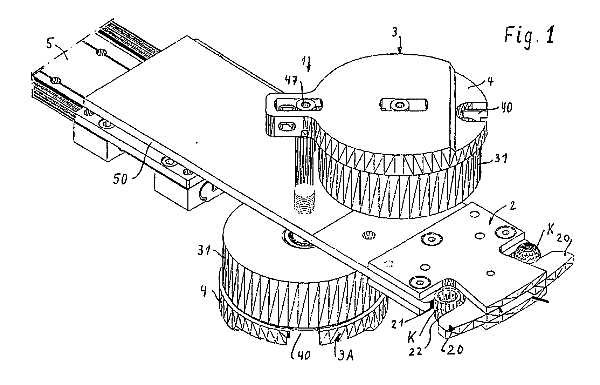

Fig. 1 zeigt einen kompletten Punktschweißkappenwechsler 1, der auf einer Trägerschiene 5 an einem Roboterarm verschieblich gehalten ist. Alternativ ist er mit der Montageplatte 50 fest installiert. Am freien Ende der Montageplatte 50 ist der zweiseitig bestückte Kappenabzieher 2 angeschraubt, wobei die beiden Greifer 20 jeweils seitlich entgegengesetzt gerichtet sind. Es sind zwischen die Backen 21, 22 abgezogene Kappen K eingezeichnet, die nach dem Abziehen an der Kante eines Ablagebehälters in diesen ausgesteift werden.

Gegen den Kappenabzieher 2 zurückversetzt sind gegeneinander seitlich versetzt je ein Kappenmagazin 3, 3A auf der Montageplatte 50 montiert, wobei die Magazindeckel 4 jeweils seitlich gerichtet und die Zugriffsöffnungen 40 achsparallel zu den abgezogenen noch gehaltenen Schweißkappen K orientiert sind, so daß die Schweißzangenschäfte beim Kappenwechsel nur kurze Wege zurücklegen müssen.

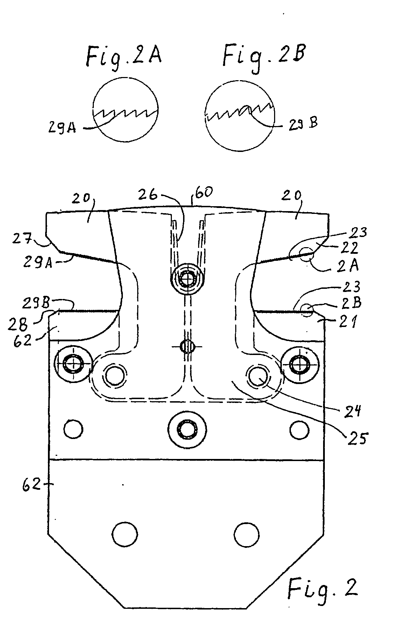

Fig. 2 zeigt eine Draufsicht auf den Kappenabzieher 2, der aus sehr wenigen Teilen besteht. Die Greifer 20 bestehen jeweils aus einer gezahnten feststehenden Backe 21 und einer zu dieser verschwenkbar montierten Backe 22. Das Schwenkgelenk 24 ist durch eine U-förmige Ausgestaltung des beweglichen Backenarmes 25 hinter die feststehende Backe 21 verlegt, wodurch eine im Greifer 20 befindliche Kappe K bei einer Verdrehung je nach der Drehrichtung eingeklemmt wird.

Die Anfangsandruckkraft der Backen 20, 21 liefert eine Spreizfeder 26, die z.B. als eine Wendel- oder Spreizfeder mit abgespreizten Enden ausgebildet ist, die sich jeweils gegen einen Backenarm 25 abstützen.

Einlaufseitig weisen die Greifer 20 Einlaufschrägen 27, 28 auf. Von diesen aus erstrecken sich jeweils die etwa parallel stehenden Greifflächen 23, die mit einer jeweils entgegengesetzt richtungsorientierten Zahnung 29A, 29B versehen sind, wie Fig. 2A und 2B im Detail ausschnittsweise zeigen. Ist keine Kappe K in den Greifer 20 eingeführt, so besitzt der Abstand A der Greifflächen 23 ein geringes Untermaß gegenüber dem Kappenaußendurchmesser D.

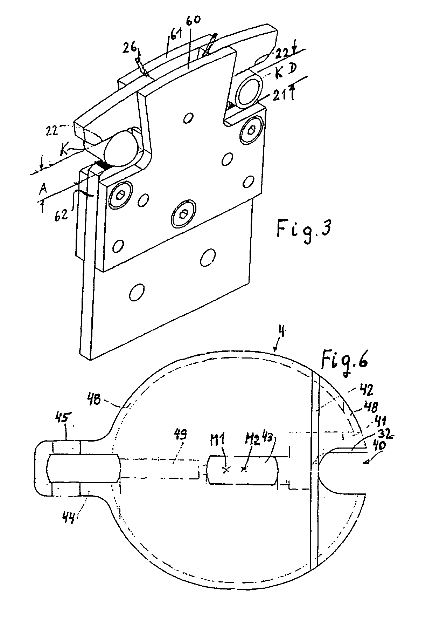

Fig. 3 verdeutlicht, daß die Feder 26 und die beweglichen Backen 21, 22 sowie eine Backenplatte 62, auf der die feststehenden Backen 21 ausgebildet sind, zwischen zwei Abdeckplatten 60, 61 gehalten sind. Die Backenplatte 62 weist eine entsprechende Ausnehmung auf, in der die U-förmigen Backenarme 25 Bewegungsfreiraum haben.

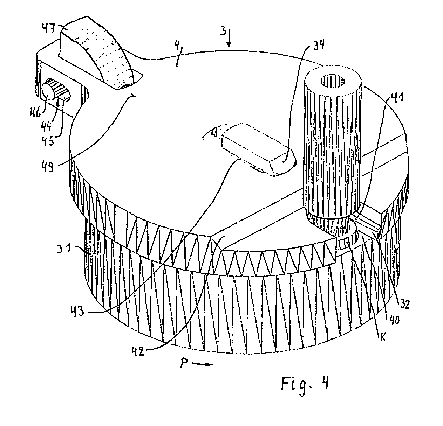

Fig. 4 zeigt ein rundes Kappenmagazin 3, das aus einem trommelartigen Kappenträger 31 besteht, der mit einem Magazindeckel 4 verschlossen ist, wobei ein radialer Ausschnitt bis zur gerundeten Zugriffsöffnung 40 freisteht, in der eine Schweißkappe K in der Entnahmestellung an eine Anschlagkante 32 am Deckel angedrückt ist.

Der Deckel 4 weist an der Rundung der Zugriffsöffnung 40 eine schmale Randüberdeckung 41 des Kappenrandes auf, an die sich eine Einführschräge 42 stufenförmig zur Deckenoberseite anschließt. Zu einer Ausführung mit einem klappbaren Deckel 4 befindet sich ein Schlitz 43, der von einem außen abgeschrägten Haken 34 durchgriffen ist, der den Deckel zuhält.

Gegenüberliegend zur Zugriffsöffnung 40 ist ein Scharnier 44 mit einem Langloch 45 in der Erstreckungsebene des Deckels ausgebildet, dessen Zapfen 46 in einer Scharnierstütze 47 gehalten ist.

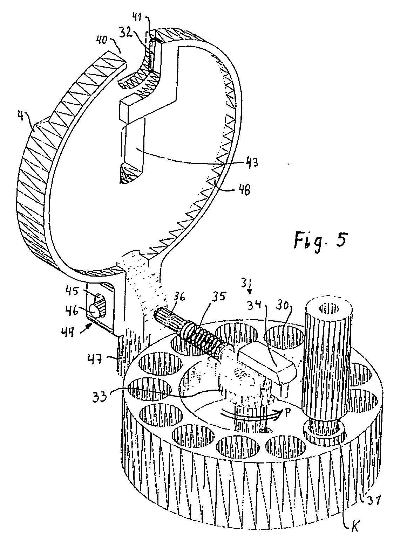

Fig. 5 zeigt das Rundmagazin 3 mit Scharnier geöffnet und mit einer Schweißkappe K in den Bohrungen 30 des Kappenträgers 31 bestückt, wobei die Kappe K um einige Millimeter daraus hervorragt. Im Zentrum des Kappenträgers 31 befindet sich feststehend montiert eine schematisch gezeigte Federdose 33, die den Haken 34 radial verschieblich trägt. In der Federdose 33 ist zentral eine vorgespannte Spindel- oder Wendelfeder angeordnet, deren eines Ende zu der Federdose 33 und deren anderes Ende an dem Kappenträger 31 festgelegt sind, so daß letzterer mit einer Drehkraft P in Richtung auf den Anschlag 32, der sich am Magazindeckel radial erstreckt, gedrückt wird.

Der Haken 34 erstreckt sich plattenförmig in einen diagonalen Führungsschlitz am Deckel der Federdose 33. Von dem Haken 34 erstreckt sich im geschlossenen Zustand, wie hier gezeigt, eine im Deckel gehaltene Druckfederanordnung 35, die sich mit einem Stützzapfen 36 an der gerundeten Scharnierstütze 47 abstützt und den Haken 34 in die Schließstellung drückt, in der er den Deckel 4 im geschlossenen Zustand übergreift und die Randüberdeckung 41 in der Überdeckungsstellung hält, wobei der Zapfen 46 sich in der hinteren Anschlagstellung im Langloch 45 befindet, wie Fig. 1 zeigt. Zum Öffnen des Deckels 4 wird der Haken 34 von Hand zurückgeschoben. Alternativ kann das Rundmagazin ohne Scharnier zum Öffnen des Deckels ausgeführt werden. In dem Fall ist der Deckel nur verschieblich gehalten, damit beim Einführen des Zangenschaftes dieser den Deckel an der Schräge 42 zur Freigabe der Randüberdeckung überschiebt.

Fig. 6 zeigt eine Draufsicht auf den Magazindeckel 4, dessen Hauptkontur aus zwei Halbkreisen mit versetzten Mittelpunkten M1, M2 besteht, wobei sich einerseits die Zugriffsöffnung 40 zum Zentrum gerichtet erstreckt und gegenüberliegend das Scharnier 44 außenseitig erstreckt. Der Schlitz 43 im Deckel 4 erstreckt sich im Mittenbereich in der Richtung zwischen der Zugriffsöffnung 40 und dem Scharnier 44. In dieser Richtung ist der Haken 34 im Deckel und in der feststehenden Federdose 33 geführt. Der Deckel 4 ist etwa 15 mm hoch und weitgehend hohl ausgebildet und weist einen versteifenden Rand 48 auf, der in den Anschlag 32 sowie andererseits in das Scharnier 44 übergeht. Der Deckel 4 ist zum Einführungsbereich an der Einführschräge 42 um ca. 5 mm erniedrigt. Innerlich führt die Deckelfläche die Kappen beim Eindrehen in die Anschlagstellung auf das Entnahmeniveau. Eine Kammer 49, die die Druckfederanordnung 35 aufnimmt, ist gestrichelt dargestellt.

Die kompakte Bauweise der Kappenabzieher mit den Magazinen ermöglicht eine erhebliche Reduzierung der Wechselzeiten beispielsweise von 22 auf 17 sec., was etwa 23% entspricht.

### Bezugszeichenliste

- 1: Punktschweißkappenwechsler
- 2: Kappenabzieher
- 20: Greifer
- 21, 22: Backen
- 23: Greifflächen
- 24: Schwenkgelenk
- 25: Backenarm
- 26: Spreizfeder
- 27, 28: Einlaufschrägen
- 29A, 29B: Zahnung
- 3, 3A: Kappenmagazine
- 30: Bohrungen
- 31: Kappenträger
- 32: Anschlag
- 33: Federdose
- 34: Haken
- 35: Druckfeder
- 36: Stützzapfen
- 4: Magazindeckel
- 40: Zugriffsöffnung
- 41: Randüberdeckung
- 42: Einführschräge auf dem Deckel
- 43: Schlitz im Deckel
- 44: Scharnier
- 45: Langloch im Scharnier
- 46: Zapfen
- 47: Scharnierstützen
- 48: Deckelrand
- 49: Druckfederkammer
- 5: Trägerschiene
- 50: Montageplatten
- 60, 61: Abdeckplatten
- 62: Backenplatte

- A: Greifbackenabstand
- D: Kappen-Außendurchmesser
- K: Kappe
- P: Vorschubkraft
- M1, M2: Halbkreismittelpunkte

## Patentansprüche

1. Punktschweißkappenwechsler (1) mit einem Kappenabzieher (2) und zwei Kappenmagazinen (3, 3A), wobei der Kappenabzieher (2) einen Greifer (20) mit federbelasteten, schwenkbaren Backen (21, 22) aufweist, der eine in diese eingeführte Punktschweißkappe (K) einer Punktschweißzange gegen eine Verdrehung einklemmend bei einer Dreh- und axialen Abzugsbewegung von einem Schweißzangenschaft ablöst und wobei die Kappenmagazine (3, 3A) Punktschweißkappen jeweils in einem Kappenträger (31) gerichtet orientiert halten und durch eine Vorschubkraft (P) jeweils nacheinander einzeln an einen Anschlag (32) in eine Zugriffsstellung befördert sind, aus der sie auf den freien Schweißzangenschaft axial aufsteckbar und mit ihm herausziehbar sind, **dadurch gekennzeichnet,**
**daß** der Kappenabzieher (2) zwei entgegengesetzt gerichtete Greifer (20) mit jeweils zueinander verschwenkbaren, endseitig geöffneten Backen (21, 22) mit annähernd parallelen gezahnten Greifflächen (23) aufweist, deren Abstand (A) ein geringes Untermass zu einem Schweisskappendurchmesser (DK) hat,
und das Kappenmagazin (3, 3A) jeweils einen Kappenträger (31) enthält, der, von einer Federdose (33) angetrieben, mit seiner Vorschubkraft (P) jeweils eine der Kappen (K) an den Anschlag drückt, und in der Zugriffsstellung eine Randüberdeckung (41) die Kappe (K) einseitig übergreift.

2. Punktschweißkappenwechsler nach Anspruch 1, **dadurch gekennzeichnet, daß** jeweils eine der Backen (21) des zugehörigen Greifers (20) feststehend an einer Backenplatte ausgebildet ist und die betreffende bewegliche Backe (22) an einem U-förmigen Backenarm (25) ausgebildet ist, der mit einem Schwenkgelenk (24) jenseits der feststehenden Backe (21) gelagert ist.

3. Punktschweißkappenwechsler nach Anspruch 2, **dadurch gekennzeichnet, daß** zwischen den beiden beweglichen Backenarmen (25) z. B. eine vorgespannte Spreizfeder (26) angeordnet ist.

4. Punktschweißkappenwechsler nach einem der vorstehenden Ansprüche, **dadurch gekennzeichnet, daß** die Backen (21, 22) Einlaufschrägen (27, 28) tragen.

5. Punktschweißkappenwechsler nach Anspruch 4, **dadurch gekennzeichnet, daß** die Greifflächen (23) jeweils eine asymmetrische Zahnung (29A, 29B) tragen, die an den beiden parallelen Backen (21, 22) entgegengesetzt gerichtet ist.

6. Punktschweißkappenwechsler nach Anspruch 3, **dadurch gekennzeichnet, daß** die Backenarme (25), die Spreizfeder (26) und die Backenplatte (62) zwischen Abdeckplatten (60, 61) gehalten sind.

7. Punktschweißkappenwechsler nach Anspruch 1, **dadurch gekennzeichnet, daß** die Federdose (33) eine Spiral- oder Wendelfeder enthält, deren Enden einerseits an der Federdose (33) und andererseits an dem Kappenträger (31) festgelegt sind.

8. Punktschweißkappenwechsler nach Anspruch 1, **dadurch gekennzeichnet, daß** ein Magazindeckel (4) durch eine Feder (35) in Richtung auf die Zugriffsöffnung (40) vorgespannt gehalten ist, so daß die Randüberdeckung (41) einen Kappenrand in dessen Anschlagstellung übergreift.

9. Punktschweißkappenwechsler nach Anspruch 8, **dadurch gekennzeichnet, daß** an der Federdose (33) ein Haken (34) federbelastet verschieblich gehalten ist, der denMagazindeckel (4) geschlossen durchgreift und übergreifend hält.

10. Punktschweißkappenwechsler nach Anspruch 8 oder 9, **dadurch gekennzeichnet, daß** der Magazindeckel (4) an einer Scharnierstütze (47) angelenkt ist, die der Zugriffsöffnung (40) gegenüber liegt.

11. Punktschweißkappenwechsler nach Anspruch 10, **dadurch gekennzeichnet, daß** der Magazindeckel (4) an der Scharnierstütze (47) in einem Langloch (45) verschiebegeführt ist.

12. Punktschweißkappenwechsler nach einem der vorstehenden Ansprüche, **dadurch gekennzeichnet, daß** der Magazindeckel (4) einen versteifenden Deckelrand (48) trägt, der einerseits in die Randüberdeckung (41) und andererseits in ein Scharnier (44) übergeht.

13. Punktschweißkappenwechsler nach einem der vorstehenden Ansprüche, **dadurch gekennzeichnet, daß** der Kappenabzieher (2) mit frontseitig überstehenden Greifern (20) auf einer Montageplatte (50) montiert ist und darauf rückseitig versetzt die Kappenmagazin (3, 3A) montiert sind.

14. Punktschweißkappenwechsler nach Anspruch 13, **dadurch gekennzeichnet, daß** die Zugriffsöffnungen (40) der Kappenmagazine (3, 3A) jeweils zu verschiedenen Seiten der Montageplatte (50) gerichtet sind und diese seitlich überragen.

15. Punktschweißkappenwechsler nach Anspruch 13 oder 14, **dadurch gekennzeichnet, daß** die Montageplatte (50) auf einer Trägerschiene (5) verschieblich geführt gehalten ist, die an einem Roboterarm montiert oder fest installiert ist.

16. Punktschweißkappenwechsler nach einem der vorstehenden Ansprüche, **dadurch gekennzeichnet, daß** an den Kappenmagazinen (3, 3A) Sensoren angeordnet sind, die einer Steuervorrichtung signalisieren, wenn nur noch eine vorgegebene Restmenge von Punktschweißkappen (K) im jeweiligen Kappenträger (31) vorrätig ist.

## Claims

1. Spot welding cap changer (1) with a cap extractor (2) and two cap magazines (3, 3A), the cap extractor (2) having a gripper (20) with spring-loaded, pivoting jaws (21, 22) which in response to a turning and axial extraction movement detaches a spot welding cap (K) of a pincer spot welding head inserted into it from a shaft of the pincer welding head in such a way that it is clamped to prevent it twisting, and the cap magazines (3, 3A) holding spot welding caps respectively in a cap carrier (31) in such a way that they are circularly arranged in a directed and oriented manner and are one by one transported by an advancing force (P) against a stop (32), into an access position allowing to attach them axially to the free shaft of the pincer and to extract them with it,
**characterized in that**
the cap extractor (2) has two opposed grippers (20), each with jaws (21, 22) that are open at their ends and can be rotated towards each other with approximately parallel toothed grip surfaces (23) whose distance (A) is slightly smaller than a diameter of a spot welding cap (DK),
and each cap magazine (3, 3 A) contains a cap carrier (31) which, driven by a spring box (33), presses by way its advancing force (P) one of the caps (K) respectively against the stop, and in the access position a rim overlap (41) overlaps the cap (K) on one side.

2. Spot welding cap changer according to claim 1, **characterized in that** respectively one of the jaws (21) of the corresponding gripper (20) is fixed at a jaw plate, and the corresponding movable jaw (22) is formed at an U-shaped jaw arm (25), which is supported with a pivot joint (24) behind the fixed jaw (21).

3. Spot welding cap changer according to claim 2, **characterized in that** between the two movable jaw arms (25), a preloaded bracing spring (26) is mounted.

4. Spot welding cap changer according to one of the above claims, **characterized in that** the jaws (21, 22) have infeed skews (27, 28).

5. Spot welding cap changer according to claim 4, **characterized in that** the grip surfaces (23) in each case have an asymmetric toothing (29A, 29B), which on the two parallel jaws (21, 22) is oriented in opposite directions.

6. Spot welding cap changer according to claim 3, **characterized in that** the jaw arms (25), the bracing spring (26) and the jaw plate (62) are held between cover plates (60, 61).

7. Spot welding cap changer according to claim 1, **characterized in that** the spring box (33) contains a spiral or coil spring, one end of which is fixed at the spring box (33), and the other end of which is fixed at the cap carrier (31).

8. Spot welding cap changer according to claim 1, **characterized in that** a magazine cover (4) is held preloaded by a spring (35) in the direction of the access opening (40) so that the rim overlap (41) overlaps a cap frame in its stop position.

9. Spot welding cap changer according to claim 8, **characterized in that** a bracket (34) is spring-loaded and movably held at the spring box (33), said bracket reaching through the closed magazine cover (4) and, by overlapping it, holding it in place.

10. Spot welding cap changer according to claim 8 or 9, **characterized in that** the magazine cover (4) is articulated at a hinge support (47), situated opposite of the access opening (40).

11. Spot welding cap changer according to claim 10, **characterized in that** the magazine cover (4) is movably guided in a slotted hole (45) on the hinge support (47).

12. Spot welding cap changer according to one of the above claims, **characterized in that** the magazine cover (4) bears a stiffening cover rim (48), which on one side forms the rim overlap (41) and on the other side forms a hinge (44).

13. Spot welding cap changer according to one of the above claims, **characterized in that** the cap extractor (2) with grippers (20) projecting at its front side is mounted on a mounting plate (50), on which with an offset to the rear the cap magazines (3, 3A) are mounted.

14. Spot welding cap changer according to claim 13, **characterized in that** the access openings (40) of the cap magazines (3, 3A) are directed towards and salient on different sides of the mounting plate (50), respectively.

15. Spot welding cap changer according to claim 13 or 14, **characterized in that** the mounting plate (50) is supported and movably guided on a support rail (5) which is mounted on a robot arm or firmly installed.

16. Spot welding cap changer according to one of the above claims, **characterized in that** sensors are arranged at the cap magazines (3, 3A), which send a signal to a control device when a predetermined remaining quantity of spot welding caps (K) is in stock in the respective cap carrier (31).

## Revendications

1. Changeur de capsules de soudage par point (1) avec un extracteur de capsules (2) et deux magasins de capsules (3, 3A), l'extracteur (2) comportant une pince (20) avec des mâchoires pivotantes et chargées par ressort (21,22), ladite pince serre contre une torsion une capsule de soudage (K) d'une pince de soudage par points, introduite dans les mâchoires, et la détache dans un mouvement d'extraction rotatif et axial d'une tige de pince de soudage, les magasins de capsules (3, 3A) portant des capsules, chacune dans un porteur de capsules (31) de façon orientée, et qui sont transportées par une force d'avance (P) dans chaque cas, l'une après l'autre séparément vers une butée (32) dans une position d'accès, d'où elles peuvent être attachées axialement à la tige libre de la pince, et extraits avec celle-ci,
**caractérisé en ce que** l'extracteur de capsules (2) comporte deux pinces opposées (20) avec des mâchoires (21, 22) pivotantes l'une vers l'autre respectivement et ouvertes à leurs extrémités, avec des stries dentelées approximativement parallèles (23), l'écart (A) des mâchoires étant faiblement inférieur à un diamètre d'une capsule de soudage par points (DK), et que chaque magasin de capsules (3, 3A) contient un porteur de capsules (31), qui, actionné par une boîte de ressort (33), par sa force d'avance (P) presse respectivement une capsule (K) contre la butée, et que dans la position d'accès un recouvrement de bordure (41) déborde la capsule (K) à un côté.

2. Changeur de capsules de soudage par point selon la revendication 1, **caractérisé en ce que** respectivement l'une des mâchoires (21) de la pince correspondante (20) est fixée à une plaque de mâchoire, et la mâchoire mobile (22) correspondante est formée sur un bras de mâchoire en forme de U (25), qui est supporté derrière la mâchoire fixée (21) dans un joint articulé pivotant (24).

3. Changeur de capsules de soudage par point selon la revendication 2, **caractérisé en ce qu'**entre les deux bras de mâchoire mobiles (25) ressort écarteur (26) précontraint est monté.

4. Changeur de capsules de soudage par point selon l'une des revendications précédentes, **caractérisée en ce que** les mâchoires (21, 22) tiennent des conduits d'accès inclinés (27, 28).

5. Changeur de capsules de soudage par point selon la revendication 4, **caractérisée en ce que** les stries (23) ont une denture asymétrique (29A, 29B), dans chaque cas, dont l'orientation est respectivement opposée sur les deux mâchoires parallèles (21, 22).

6. Changeur de capsules de soudage par point selon la revendication 3, **caractérisé en ce que** les bras de mâchoire (25), le ressort écarteur (26) et la plaque de mâchoire (62) sont tenus entre des plaques de recouvrement (60, 61).

7. Changeur de capsules de soudage par point selon la revendication 1, **caractérisé en ce que** la boîte de ressort (33) contient un ressort en spirale ou à boudin, dont les extrémités sont fixées d'une coté à la boîte de ressort (33), et de l'autre coté au porteur de capsules (31).

8. Changeur de capsules de soudage par point selon la revendication 1, **caractérisé en ce qu'**un couvercle de magasin (4) est tenu et précontraint par un ressort (35) dans la direction de l'ouverture d'accès (40) de sorte que le recouvrement de bordure (41) déborde une bordure de la capsule dans sa position d'arrêt.

9. Changeur de capsules de soudage par point selon la revendication 8, **caractérisé en ce qu'**un crochet (34) est tenu de façon amovible, chargé par ressort, sur la boîte de ressort (33), et traverse le couvercle de magasin (4) et le tient en l'enjambant.

10. Changeur de capsules de soudage par point selon la revendication 8 ou 9, **caractérisé en ce que** le couvercle de magasin (4) est articulé sur un support de charnière (47) opposé à l'ouverture d'accès (40).

11. Changeur de capsules de soudage par point selon la revendication 10, **caractérisé en ce que** (4) le couvercle de magasin est guidé de façon amovible dans un trou oblong (45) au support de charnière (47).

12. Changeur de capsules de soudage par point selon l'une des revendications précédentes, **caractérisé en ce que** le couvercle de magasin (4) porte une bordure de couvercle raidisseuse (48), qui sur une coté forme le recouvrement de bordure (41) et sur l'autre coté forme une charnière (44).

13. Changeur de capsules de soudage par point selon l'une des revendications précédentes, **caractérisé en ce que** l'extracteur de capsules (2) avec des pinces (20) saillantes de sa face, est monté sur une plaque de montage (50), sur laquelle, décalés vers l'arrière, les magasins de capsules (3, 3 A) sont montés.

14. Changeur de capsules de soudage par point selon la revendication 13, **caractérisé en ce que** les ouvertures d'accès (40) des magasins de capsules (3, 3A) sont orientées vers différents côtés de la plaque de montage (50), respectivement, et saillent latéralement.

15. Changeur de capsules de soudage par point selon la revendication 13 ou 14, **caractérisé en ce que** la plaque de montage (50) est tenue de façon amovible et conduite sur une barre de support (5), qui est monté sur un bras robot ou installé fixement.

16. Changeur de capsules de soudage par point selon l'une des revendications précédentes, **caractérisé en ce que** des capteurs sont arrangés sur les magasins de capsules (3, 3A), émettant un signal à un dispositif de commande, quand seulement une quantité prédéterminée des capsules (K) reste en stock dans le porteur de capsules (31) respectif.
